# EUROPEAN PATENT APPLICATION

(11) **EP 3 107 057 A1**
(43) Date of publication of application: **21.12.2016**
(21) Application number: 16000416.4
(22) Date of filing: 19.02.2016
(51) Int. Cl.: G06Q 30/02, G06Q 10/06

(54) **MOBILE TERMINAL AND USER PROFILE USING METHOD THEREOF**

(30) Priority: 16.06.2015 KR 20150085356
(71) Applicant: LG Electronics Inc., Seoul 07336 (KR)
(72) Inventor: SHIM, Hongjo, 06772 Seoul (KR); LIM, Gukchan, 06772 Seoul (KR); LEE, Yoonwoo, 06772 Seoul (KR); KIM, Seonghyok, 06772 Seoul (KR); PARK, Mihyun, 06772 Seoul (KR); LEE, Dongeon, 06772 Seoul (KR)
(74) Representative: Beyer, Andreas

(57) **Abstract**

The present disclosure relates to a mobile terminal and a user profile management method thereof capable of registering a preference article to a wish list of a profile to send and receive a gift between users using the wish list, and may include registering an item to a wish list of a first user profile; allowing a second user to access a first user's profile; and presenting an item to the first user as a gift in response to the second user's selection of a previously registered item from a wish list of the accessed profile.

## Description

### BACKGROUND OF THE INVENTION

### 1. Field of the invention

The present disclosure relates to a mobile terminal capable of registering a wish list to a profile to send and receive a preference item, and a user profile management method thereof.

### 2. Description of the related art

Terminals can be classified into two types, such as a mobile or portable terminal and a stationary terminal based on its mobility. Furthermore, the mobile terminal can be further classified into two types, such as a handheld terminal and a vehicle mount terminal based on whether or not it can be directly carried by a user.

The functionality of the mobile terminal has been diversified. For example, there are functions of data and voice communication, photo capture and video capture through a camera, voice recording, music file reproduction through a speaker system, and displaying an image or video on the display unit. Some terminals may additionally perform an electronic game play function or perform a multimedia play function. In particular, recent terminals may receive multicast signals for providing video contents such as broadcasts, videos, television programs, or the like.

As it becomes multifunctional, for example, such a terminal is allowed to capture still images or moving images, play music or video files, play games, receive broadcast and the like, so as to be implemented as an integrated multimedia player. In order to support and enhance the functions of the terminal, the improvement of structural or software elements of the terminal may be taken into consideration. In general, a user may access a commerce server using a mobile terminal and then purchase a product or display information associated with an article on a messenger or blog and then perform a group purchase of the article with other users. Furthermore, a user who purchased a product with the foregoing method may select a delivery means to present a gift to another person.

However, since the presented product is mainly selected according to a buyer's preference and sent to another person, a gift recipient's preference may not be considered, and particularly during a specific period (for example, wedding, holiday), it may occur a case where the same product is presented as a gift to single person in a redundant manner. For an example, during thanksgiving days, apples may be offered as a gift though he or she has a lot of apples at home or a baby walker may be presented as a gift though he or she already has a baby walker. In this case, a person who has received the same article several times has a burden of getting a refund to purchase another product or exchanging it with another product. Accordingly, when a first user presents a gift to a second user, if the first user recognizes the second user's taste, more particularly, his or her preferred article, to present the corresponding article as a gift, then it may be possible to increase the satisfaction of presenting a gift as well as resolve a burden of making an exchange or a refund.

### SUMMARY OF THE INVENTION

An object of the present disclosure is to provide a mobile terminal and a user profile management method thereof capable of sending and receiving a gift through a wish list of a user profile.

Another object of the present disclosure is to provide a mobile terminal and a user profile management method thereof capable of registering an item on which a user's taste is reflected to a wish list to receive his or her preferred item as a gift.

In order to accomplish the foregoing objectives, a profile management method of a mobile terminal according to an embodiment of the present disclosure may include registering an item to a wish list of a first user profile; allowing a second user to access a first user's profile; and presenting an item to the first user as a gift in response to the second user's selection of a previously registered item from a wish list of the accessed profile.

According to the embodiment, the profile may include an SNS profile, an SMS profile and a messenger profile.

According to the embodiment, the wish list may include at least one or more gift categories, and each gift category may include a plurality of preference items.

According to the embodiment, said registering the wish list may include displaying a plurality of gift categories when a wish list icon is selected; selecting a preference item from a specific gift category among the plurality of gift categories; and storing the selected preference item, wherein the remaining gift categories for which any preference item is not selected from the plurality of gift categories are deactivated.

According to the embodiment, the profile management method may further include displaying a previously registered preference item when the wish list registration icon is selected; and setting a user's taste information and distance information to the displayed preference item, wherein the preference information comprises a type of preference item and a maker name of selling or producing the preference item.

According to the embodiment, the profile management method may further include setting a privacy function to the registered wish list in response to the first user's input, wherein when the privacy function is set, a registered wish list is displayed only for a specific user.

According to the embodiment, said presenting a gift may include making a payment for the selected preference item; and transmitting information of notifying that an item has been presented to the first user as a gift along with the paid item information when the payment is completed.

According to the embodiment, the profile management method may further include presenting an item to the first user as a gift in response the second user's access to the first user's profile to select the relevant item that is not registered to a wish list.

According to the embodiment, said presenting a gift may include making a payment for the selected item; transferring the delivery of the paid item to the first user; and transmitting the paid item information along with information of notifying that the item has been presented as a gift to the first user when the delivery is transferred, wherein the first user enters delivery information on the gift received item to complete a gift receipt or selects another gift category to exchange the gift received item with another item.

According to the embodiment, the profile management method may further include presenting an item to the first user as a gift in response to the second user's purchase of the item on an offline store, wherein the offline store transmits information of requesting the delivery of the paid item to the first user, and the first user enters delivery information on the item to complete a gift receipt. In order to accomplish the foregoing objectives, a mobile terminal according to an embodiment of the present disclosure may include a display unit configured to display a first user's profile; and a controller configured to transmit information of notifying that a predetermined item has been presented as a gift along with item information to the first user in response to a second user's selection of the relevant item from a wish list registered to the first user's profile.

According to the embodiment, the profile may include an SNS profile, an SMS profile and a messenger profile.

According to the embodiment, the wish list may include at least one or more gift categories, and each gift category may include a plurality of preference items.

According to the embodiment, the controller of the first user terminal may display a plurality of gift categories when a wish list icon is selected, and display a wish list registration icon on a wish list icon while storing a preference item when the relevant preference item is selected from the gift category, and deactivate the remaining gift categories for which any item is not selected from the plurality of gift categories.

According to the embodiment, when a wish list registration icon is selected, the controller may display a previously registered item, and set a user's entered preference information and distance information to the displayed item, wherein the preference information comprises a type of preference item and a maker name of selling or producing the preference item.

According to the embodiment, the controller of the first user terminal may set a privacy function to the registered wish list according to the first user's selection, and a registered wish list may be displayed only for a specific user when the privacy function is set.

According to the embodiment, when an item that is not registered to the wish list is selected and paid, the controller of the second user terminal may transmit the paid item information along with information of notifying that the item has been presented as a gift to the first user to transfer the delivery of the item, and the first user may enter delivery information on the gift received item to complete a gift receipt or select another gift category to exchange the gift received item with another item.

According to the embodiment, when information indicating that an item has been presented as a gift is received from an offline store, the controller of the first terminal may set the delivery information of the item according to the first user's input to complete a gift receipt.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.
In the drawings:
FIG. 1A is a block diagram illustrating a mobile terminal associated with the present disclosure;
FIGS. 1B and 1C are conceptual views in which an example of a mobile terminal associated with the present disclosure is seen from different directions;
FIG. 2 is a flow chart of registering a wish list to a profile according to an embodiment of the present disclosure;
FIG. 3 is a specific embodiment of registering a wish list to a profile according to an embodiment of the present disclosure;
FIG. 4 is an example of displaying a wish list registered to a profile;
FIG. 5 is a flow chart of presenting an item as a gift using a wish list registered to a profile according to the present disclosure;
FIG. 6 is a specific embodiment of presenting an item as a gift to another user using a wish list according to an embodiment of the present disclosure;
FIG. 7 is an example of deactivating a gift category desired not to receive as a gift;
FIG. 8 is an example of allowing another user to check a wish list registered to a profile;
FIG. 9 is an embodiment of reflecting a user's taste on a wish list;
FIG. 10 is an example of checking a wish list on which a user's taste is reflected from a profile;
FIG. 11 is another embodiment of reflecting a user's taste on a wish list;
FIG. 12 is another example of checking a wish list on which a user's taste is reflected from a profile;
FIG. 13 is an embodiment of presenting an item that is not registered to a profile as a gift;
FIG. 14 is an embodiment of exchanging a gift received payment item through a profile;
FIG. 15 is an embodiment of requesting the delivery of an offline paid item on online; and
FIG. 16 is an embodiment of acquiring a user's lifestyle to guide an exchange of an article according to exercise intensity or purpose.

### DETAILED DESCRIPTION OF THE INVENTION

Description will now be given in detail according to the exemplary embodiments disclosed herein, with reference to the accompanying drawings. For the sake of brief description with reference to the drawings, the same or equivalent components will be provided with the same reference numbers, and description thereof will not be repeated. A suffix "module" and "unit" used for constituent elements disclosed in the following description is merely intended for easy description of the specification, and the suffix itself does not give any special meaning or function. In describing the present disclosure, if a detailed explanation for a related known function or construction is considered to unnecessarily divert the gist of the present disclosure, such explanation has been omitted but would be understood by those skilled in the art. The accompanying drawings are used to help easily understand the technical idea of the present disclosure and it should be understood that the idea of the present disclosure is not limited by the accompanying drawings. The idea of the present disclosure should be construed to extend to any alterations, equivalents and substitutes besides the accompanying drawings.

It will be understood that, although the terms first, second, etc. may be used herein to describe various elements, these elements should not be limited by these terms. These terms are only used to distinguish one element from another.

It will be understood that when an element is referred to as being "connected with" another element, the element can be directly connected with the other element or intervening elements may also be present. In contrast, when an element is referred to as being "directly connected with" another element, there are no intervening elements present.

A singular representation may include a plural representation as far as it represents a definitely different meaning from the context.

Terms 'include' or 'has' used herein should be understood that they are intended to indicate an existence of several components or several steps, disclosed in the specification, and it may also be understood that part of the components or steps may not be included or additional components or steps may further be included.

Mobile terminals described herein may include cellular phones, smart phones, laptop computers, digital broadcasting terminals, personal digital assistants (PDAs), portable multimedia players (PMPs), navigators, slate PCs, tablet PCs, ultra books, wearable devices (for example, smart watches, smart glasses, head mounted displays (HMDs)), and the like.

However, it may be easily understood by those skilled in the art that the configuration according to the exemplary embodiments of this specification can also be applied to stationary terminals such as digital TV, desktop computers and the like, excluding a case of being applicable only to the mobile terminals.

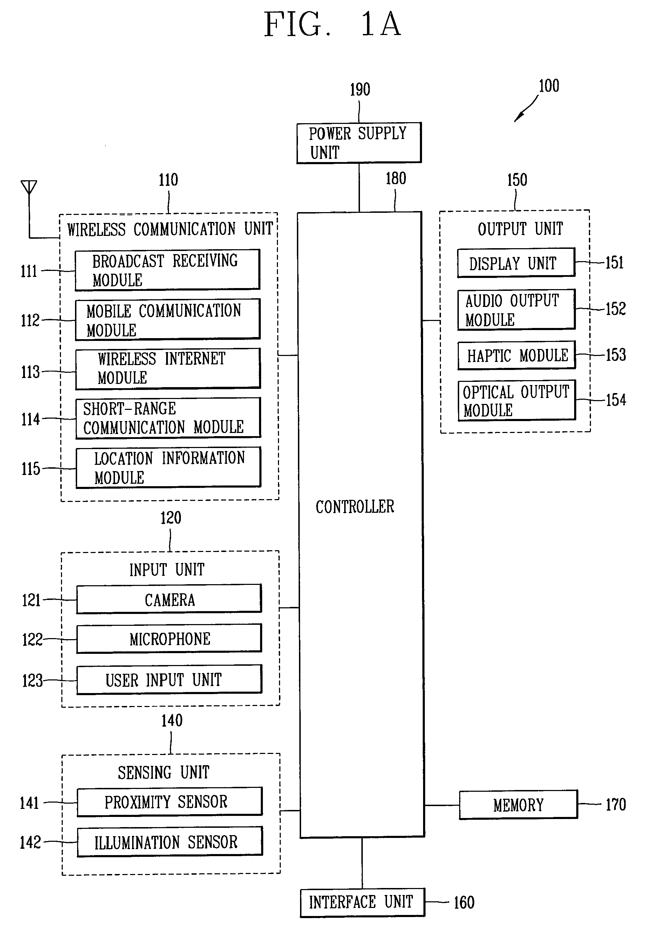

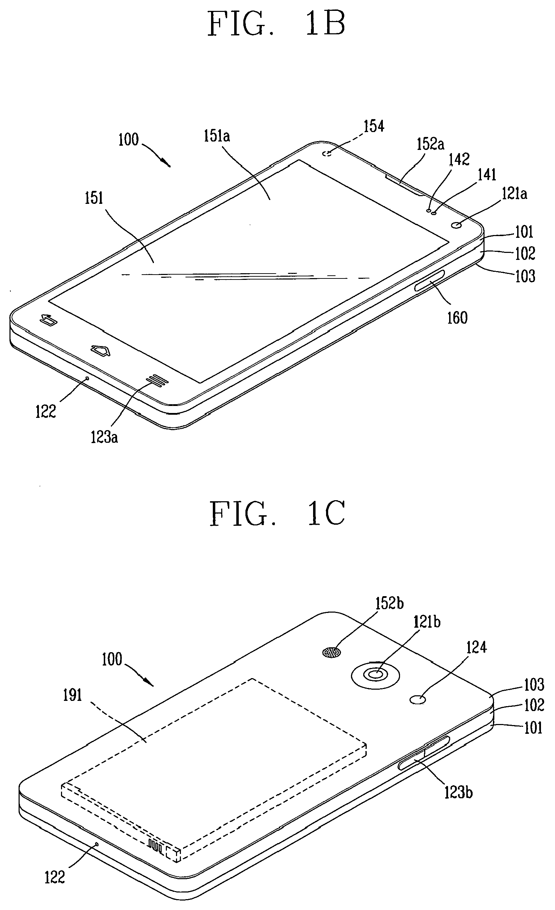

Referring to FIGS. 1A through 1C, FIG. 1A is a block diagram of a mobile terminal in accordance with the present disclosure, FIGS. 1B and 1C are conceptual views of one example of the mobile terminal, viewed from different directions.

The mobile terminal 100 may include components, such as a wireless communication unit 110, an input unit 120, a sensing unit 140, an output unit 150, an interface unit 160, a memory 170, a controller 180, a power supply unit 190 and the like. FIG. 1A illustrates the mobile terminal having various components, but it may be understood that implementing all of the illustrated components is not a requirement. Greater or fewer components may alternatively be implemented.

In more detail, the wireless communication unit 110 of those components may typically include one or more modules which permit wireless communications between the mobile terminal 100 and a wireless communication system, between the mobile terminal 100 and another mobile terminal 100, or between the mobile terminal 100 and a network within which another mobile terminal 100 (or an external server) is located.

The wireless communication unit 110 may include at least one of a broadcast receiving module 111, a mobile communication module 112, a wireless Internet module 113, a short-range communication module 114, a location information module 115 and the like.

The input unit 120 may include a camera 121 for inputting an image signal, a microphone 122 or an audio input module for inputting an audio signal, or a user input unit 123 (for example, a touch key, a push key (or a mechanical key), etc.) for allowing a user to input information. Audio data or image data collected by the input unit 120 may be analyzed and processed by a user's control command.

The sensing unit 140 may include at least one sensor which senses at least one of internal information of the mobile terminal, a surrounding environment of the mobile terminal and user information. For example, the sensing unit 140 may include a proximity sensor 141, an illumination sensor 142, a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, refer to the camera 121), a microphone 122, a battery gage, an environment sensor (for example, a barometer, a hygrometer, a thermometer, a radiation detection sensor, a thermal sensor, a gas sensor, etc.), and a chemical sensor (for example, an electronic nose, a health care sensor, a biometric sensor, etc.). On the other hand, the mobile terminal disclosed herein may utilize information in such a manner of combining information sensed by at least two sensors of those sensors.

The output unit 150 may be configured to output an audio signal, a video signal or a tactile signal. The output unit 150 may include a display unit 151, an audio output module 152, a haptic module 153, an optical output module 154 and the like. The display unit 151 may have an inter-layered structure or an integrated structure with a touch sensor so as to implement a touch screen. The touch screen may provide an output interface between the mobile terminal 100 and a user, as well as functioning as the user input unit 123 which provides an input interface between the mobile terminal 100 and the user.

The interface unit 160 may serve as an interface with various types of external devices connected with the mobile terminal 100. The interface unit 160, for example, may include wired or wireless headset ports, external power supply ports, wired or wireless data ports, memory card ports, ports for connecting a device having an identification module, audio input/output (I/O) ports, video I/O ports, earphone ports, or the like. The mobile terminal 100 may execute an appropriate control associated with a connected external device, in response to the external device being connected to the interface unit 160.

The memory 170 may store a plurality of application programs (or applications) executed in the mobile terminal 100, data for operations of the mobile terminal 100, instruction words, and the like. At least some of those application programs may be downloaded from an external server via wireless communication. Some others of those application programs may be installed within the mobile terminal 100 at the time of being shipped for basic functions of the mobile terminal 100 (for example, receiving a call, placing a call, receiving a message, sending a message, etc.). On the other hand, the application programs may be stored in the memory 170, installed in the mobile terminal 100, and executed by the controller 180 to perform an operation (or a function) of the mobile terminal 100.

The controller 180 may typically control an overall operation of the mobile terminal 100 in addition to the operations associated with the application programs. The controller 180 may provide or process information or functions appropriate for a user in a manner of processing signals, data, information and the like, which are input or output by the aforementioned components, or activating the application programs stored in the memory 170.

The controller 180 may control at least part of the components illustrated in FIG. 1, in order to drive the application programs stored in the memory 170. In addition, the controller 180 may drive the application programs by combining at least two of the components included in the mobile terminal 100 for operation.

The power supply unit 190 may receive external power or internal power and supply appropriate power required for operating respective elements and components included in the mobile terminal 100 under the control of the controller 180. The power supply unit 190 may include a battery, and the battery may be an embedded battery or a replaceable battery.

At least part of those elements and components may be combined to implement operation and control of the mobile terminal or a control method of the mobile terminal according to various exemplary embodiments described herein. Also, the operation and control or the control method of the mobile terminal may be implemented in the mobile terminal in such a manner of activating at least one application program stored in the memory 170.

Hereinafter, each aforementioned component will be described in more detail with reference to FIG. 1A, prior to explaining various exemplary embodiments implemented by the mobile terminal 100 having the configuration.

First, the wireless communication unit 110 will be described. The broadcast receiving module 111 of the wireless communication unit 110 may receive a broadcast signal and/or broadcast associated information from an external broadcast managing entity via a broadcast channel. The broadcast channel may include a satellite channel and a terrestrial channel. At least two broadcast receiving modules 111 may be provided in the mobile terminal 100 to simultaneously receive at least two broadcast channels or switch the broadcast channels.

The mobile communication module 112 may transmit/receive wireless signals to/from at least one of network entities, for example, a base station, an external mobile terminal, a server, and the like, on a mobile communication network, which is constructed according to technical standards or transmission methods for mobile communications (for example, Global System for Mobile communication (GSM), Code Division Multi Access (CDMA), Code Division Multi Access 2000 (CDMA2000), Enhanced Voice-Data Optimized or Enhanced Voice-Data Only (EV-DO), Wideband CDMA (WCDMA), High Speed Downlink Packet Access (HSDPA), High Speed Uplink Packet Access (HSUPA), Long Term Evolution (LTE), Long Term Evolution-Advanced (LTE-A), etc.)

Here, the wireless signals may include audio call signal, video (telephony) call signal, or various formats of data according to transmission/reception of text/multimedia messages.

The wireless Internet module 113 denotes a module for wireless Internet access. This module may be internally or externally coupled to the mobile terminal 100. The wireless Internet module 113 may transmit/receive wireless signals via communication networks according to wireless Internet technologies.

Examples of such wireless Internet access may include Wireless LAN (WLAN), Wireless-Fidelity (Wi-Fi), Wireless Fidelity Direct (Wi-Fi Direct), Digital Living Network Alliance (DLNA), Wireless Broadband (WiBro), World Interoperability for Microwave Access (WiMAX), High Speed Downlink Packet Access (HSDPA), High Speed Uplink Packet Access (HSUPA), LTE (Long Term Evolution), LTE-A (Long Term Evolution-Advanced), and the like. The wireless Internet module 113 may transmit/receive data according to at least one wireless Internet technology within a range including even Internet technologies which are not aforementioned.

From the perspective that the wireless Internet accesses according to Wibro, HSDPA, GSM, CDMA, WCDMA, LTE, LTE-A and the like are executed via a mobile communication network, the wireless Internet module 113 which performs the wireless Internet access via the mobile communication network may be understood as a type of the mobile communication module 112.

The short-range communication module 114 denotes a module for short-range communications. Suitable technologies for implementing the short-range communications may include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless Universal Serial Bus (Wireless USB) and the like. The short-range communication module 114 may support wireless communications between the mobile terminal 100 and a wireless communication system, between the mobile terminal 100 and another mobile terminal 100, or between the mobile terminal and a network where another mobile terminal 100 (or an external server) is located, via wireless personal area networks.

Here, the another mobile terminal 100 may be a wearable device, for example, a smart watch, a smart glass or a head mounted display (HMD), which is able to exchange data with the mobile terminal 100 (or to cooperate with the mobile terminal 100). The short-range communication module 114 may sense (recognize) a wearable device, which is able to communicate with the mobile terminal), near the mobile terminal 100. In addition, when the sensed wearable device is a device which is authenticated to communicate with the mobile terminal 100 according to the present disclosure, the controller 180 may transmit at least part of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user may check the received message using the wearable device.

The location information module 115 denotes a module for detecting or calculating a position of the mobile terminal. An example of the location information module 115 may include a Global Position System (GPS) module or a Wi-Fi module. For example, when the mobile terminal uses the GPS module, a position of the mobile terminal may be acquired using a signal sent from a GPS satellite. As another example, when the mobile terminal uses the Wi-Fi module, a position of the mobile terminal may be acquired based on information related to a wireless access point (AP) which transmits or receives a wireless signal to or from the Wi-Fi module. According to the need, the location information module 115 may perform any function of the other modules of the wireless communication unit 110 to obtain data on the location of the mobile terminal. As a module used to acquire the location (or current location) of the mobile terminal, the location information module 115 may not be necessarily limited to a module for directly calculating or acquiring the location of the mobile terminal.

Hereinafter, the input unit 120 will be described in more detail. The input unit 120 may be configured to provide an audio or video signal (or information) input to the mobile terminal or information input by a user to the mobile terminal. For the input of the audio information, the mobile terminal 100 may include one or a plurality of cameras 121. The camera 121 may process image frames of still pictures or video obtained by image sensors in a video call mode or a capture mode. The processed image frames may be displayed on the display unit 151. On the other hand, the plurality of cameras 121 disposed in the mobile terminal 100 may be arranged in a matrix configuration. By use of the cameras 121 having the matrix configuration, a plurality of image information having various angles or focal points may be input into the mobile terminal 100. Also, the plurality of cameras 121 may be arranged in a stereoscopic structure to acquire a left image and a right image for implementing a stereoscopic image.

The microphone 122 may process an external audio signal into electric audio data. The processed audio data may be utilized in various manners according to a function being executed in the mobile terminal 100 (or an application program being executed). On the other hand, the microphone 122 may include assorted noise removing algorithms to remove noise generated in the course of receiving the external audio signal.

The user input unit 123 may receive information input by a user. When information is input through the user input unit 123, the controller 180 may control an operation of the mobile terminal 100 to correspond to the input information. The user input unit 123 may include a mechanical input element (or a mechanical key, for example, a button located on a front/rear surface or a side surface of the mobile terminal 100, a dome switch, a jog wheel, a jog switch, etc.), and a touch-sensitive input means. As one example, the touch-sensitive input means may be a virtual key, a soft key or a visual key, which is displayed on a touch screen through software processing, or a touch key which is disposed on a portion except for the touch screen. On the other hand, the virtual key or the visual key may be displayable on the touch screen in various shapes, for example, graphic, text, icon, video or a combination thereof.

The sensing unit 140 may sense at least one of internal information of the mobile terminal, surrounding environment information of the mobile terminal and user information, and generate a sensing signal corresponding to it. The controller 180 may control an operation of the mobile terminal 100 or execute data processing, a function or an operation associated with an application program installed in the mobile terminal based on the sensing signal. Hereinafter, description will be given in more detail of representative sensors of various sensors which may be included in the sensing unit 140.

First, a proximity sensor 141 refers to a sensor to sense presence or absence of an object approaching to a surface to be sensed, or an object disposed near a surface to be sensed, by using an electromagnetic field or infrared rays without a mechanical contact. The proximity sensor 141 may be arranged at an inner region of the mobile terminal covered by the touch screen, or near the touch screen. The proximity sensor 141 may have a longer lifespan and a more enhanced utility than a contact sensor.

The proximity sensor 141, for example, may include a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and so on. When the touch screen is implemented as a capacitance type, the proximity sensor 141 may sense proximity of a pointer to the touch screen by changes of an electromagnetic field, which is responsive to an approach of an object with conductivity. In this case, the touch screen (touch sensor) may be categorized into a proximity sensor.

Hereinafter, for the sake of brief explanation, a status that the pointer is positioned to be proximate onto the touch screen without contact will be referred to as 'proximity touch,' whereas a status that the pointer substantially comes in contact with the touch screen will be referred to as 'contact touch.' For the position corresponding to the proximity touch of the pointer on the touch screen, such position will correspond to a position where the pointer faces perpendicular to the touch screen upon the proximity touch of the pointer. The proximity sensor 141 may sense proximity touch, and proximity touch patterns (e.g., distance, direction, speed, time, position, moving status, etc.). On the other hand, the controller 180 may process data (or information) corresponding to the proximity touches and the proximity touch patterns sensed by the proximity sensor 141, and output visual information corresponding to the process data on the touch screen. In addition, the controller 180 may control the mobile terminal 100 to execute different operations or process different data (or information) according to whether a touch with respect to the same point on the touch screen is either a proximity touch or a contact touch.

A touch sensor may sense a touch (or touch input) applied onto the touch screen (or the display unit 151) using at least one of various types of touch methods, such as a resistive type, a capacitive type, an infrared type, a magnetic field type, and the like.

As one example, the touch sensor may be configured to convert changes of pressure applied to a specific part of the display unit 151 or a capacitance occurring from a specific part of the display unit 151, into electric input signals. Also, the touch sensor may be configured to sense not only a touched position and a touched area, but also touch pressure. Here, a touch object is an object to apply a touch input onto the touch sensor. Examples of the touch object may include a finger, a touch pen, a stylus pen, a pointer or the like.

When touch inputs are sensed by the touch sensors, corresponding signals may be transmitted to a touch controller. The touch controller may process the received signals, and then transmit corresponding data to the controller 180. Accordingly, the controller 180 may sense which region of the display unit 151 has been touched. Here, the touch controller may be a component separate from the controller 180 or the controller 180 itself.

On the other hand, the controller 180 may execute a different control or the same control according to a type of an object which touches the touch screen (or a touch key provided in addition to the touch screen). Whether to execute the different control or the same control according to the object which gives a touch input may be decided based on a current operating state of the mobile terminal 100 or a currently executed application program.

Meanwhile, the touch sensor and the proximity sensor may be executed individually or in combination, to sense various types of touches, such as a short (or tap) touch, a long touch, a multi-touch, a drag touch, a flick touch, a pinch-in touch, a pinch-out touch, a swype touch, a hovering touch, and the like.

An ultrasonic sensor may be configured to recognize position information relating to a sensing object by using ultrasonic waves. The controller 180 may calculate a position of a wave generation source based on information sensed by an illumination sensor and a plurality of ultrasonic sensors. Since light is much faster than ultrasonic waves, a time for which the light reaches the optical sensor may be much shorter than a time for which the ultrasonic wave reaches the ultrasonic sensor. The position of the wave generation source may be calculated using the fact. In more detail, the position of the wave generation source may be calculated by using a time difference from the time that the ultrasonic wave reaches based on the light as a reference signal.

The camera 121 constructing the input unit 120 may be a type of camera sensor. The camera sensor may include at least one of a photo sensor (or image sensor) and a laser sensor.

The camera 121 and the laser sensor may be combined to detect a touch of the sensing object with respect to a 3D stereoscopic image. The photo sensor may be laminated on the display device. The photo sensor may be configured to scan a movement of the sensing object in proximity to the touch screen. In more detail, the photo sensor may include photo diodes and transistors at rows and columns to scan content placed on the photo sensor by using an electrical signal which changes according to the quantity of applied light. Namely, the photo sensor may calculate the coordinates of the sensing object according to variation of light to thus obtain position information of the sensing object.

The display unit 151 may output information processed in the mobile terminal 100. For example, the display unit 151 may display execution screen information of an application program driven in the mobile terminal 100 or user interface (UI) and graphic user interface (GUI) information in response to the execution screen information.

The display unit 151 may also be implemented as a stereoscopic display unit for displaying stereoscopic images.

The stereoscopic display unit 152 may employ a stereoscopic display scheme such as stereoscopic scheme (a glass scheme), an auto-stereoscopic scheme (glassless scheme), a projection scheme (holographic scheme), or the like.

The audio output module 152 may output audio data received from the wireless communication unit 110 or stored in the memory 160 in a call signal reception mode, a call mode, a record mode, a voice recognition mode, a broadcast reception mode, and the like. Also, the audio output module 152 may also provide audible output signals related to a particular function (e.g., a call signal reception sound, a message reception sound, etc.) performed by the mobile terminal 100. The audio output module 152 may include a receiver, a speaker, a buzzer or the like.

A haptic module 153 may generate various tactile effects the that user may feel. A typical example of the tactile effect generated by the haptic module 153 may be vibration. Strength, pattern and the like of the vibration generated by the haptic module 153 may be controllable by a user selection or setting of the controller. For example, the haptic module 153 may output different vibrations in a combining manner or a sequential manner.

Besides vibration, the haptic module 153 may generate various other tactile effects, including an effect by stimulation such as a pin arrangement vertically moving with respect to a contact skin, a spray force or suction force of air through a jet orifice or a suction opening, a touch on the skin, a contact of an electrode, electrostatic force, etc., an effect by reproducing the sense of cold and warmth using an element that can absorb or generate heat, and the like.

The haptic module 153 may be implemented to allow the user to feel a tactile effect through a muscle sensation such as the user's fingers or arm, as well as transferring the tactile effect through a direct contact. Two or more haptic modules 153 may be provided according to the configuration of the mobile terminal 100.

An optical output module 154 may output a signal for indicating an event generation using light of a light source. Examples of events generated in the mobile terminal 100 may include a message reception, a call signal reception, a missed call, an alarm, a schedule notice, an email reception, an information reception through an application, and the like.

A signal output by the optical output module 154 may be implemented in such a manner that the mobile terminal emits monochromatic light or light with a plurality of colors. The signal output may be terminated as the mobile terminal senses a user's event checking.

The interface unit 160 may serve as an interface with every external device connected with the mobile terminal 100. For example, the interface unit 160 may receive data transmitted from an external device, receive power to transfer to each element within the mobile terminal 100, or transmit internal data of the mobile terminal 100 to an external device. For example, the interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (referred to as 'identifying device', hereinafter) may take the form of a smart card. Accordingly, the identifying device may be connected with the terminal 100 via the interface unit 160.

When the mobile terminal 100 is connected with an external cradle, the interface unit 160 may serve as a passage to allow power from the cradle to be supplied to the mobile terminal 100 therethrough or may serve as a passage to allow various command signals input by the user from the cradle to be transferred to the mobile terminal therethrough. Various command signals or power input from the cradle may operate as signals for recognizing that the mobile terminal is properly mounted on the cradle.

The memory 170 may store programs for operations of the controller 180 and temporarily store input/output data (for example, phonebook, messages, still images, videos, etc.). The memory 170 may store data related to various patterns of vibrations and audio which are output in response to touch inputs on the touch screen.

The memory 170 may include at least one type of storage medium including a Flash memory, a hard disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, and an optical disk. Also, the mobile terminal 100 may be operated in relation to a web storage device that performs the storage function of the memory 170 over the Internet.

As aforementioned, the controller 180 may typically control the general operations of the mobile terminal 100. For example, the controller 180 may set or release a lock state for restricting a user from inputting a control command with respect to applications when a status of the mobile terminal meets a preset condition.

The controller 180 may also perform controlling and processing associated with voice calls, data communications, video calls, and the like, or perform pattern recognition processing to recognize a handwriting input or a picture drawing input performed on the touch screen as characters or images, respectively. In addition, the controller 180 may control one or combination of those components in order to implement various exemplary embodiment disclosed herein on the mobile terminal 100.

The power supply unit 190 may receive external power or internal power and supply appropriate power required for operating respective elements and components included in the mobile terminal 100 under the control of the controller 180. The power supply unit 190 may include a battery. The battery may be an embedded battery which is rechargeable or be detachably coupled to the terminal body for charging.

The power supply unit 190 may include a connection port. The connection port may be configured as one example of the interface unit 160 to which an external (re)charger for supplying power to recharge the battery is electrically connected.

As another example, the power supply unit 190 may be configured to recharge the battery in a wireless manner without use of the connection port. Here, the power supply unit 190 may receive power, transferred from an external wireless power transmitter, using at least one of an inductive coupling method which is based on magnetic induction or a magnetic resonance coupling method which is based on electromagnetic resonance.

Various embodiments described herein may be implemented in a computer-readable or its similar medium using, for example, software, hardware, or any combination thereof.

Referring to FIGS. 1B and 1C, the mobile terminal 100 disclosed herein may be provided with a bar-type terminal body. However, the present disclosure may not be limited to this, but also may be applicable to various structures such as watch type, clip type, glasses type or folder type, flip type, slide type, swing type, swivel type, or the like, in which two and more bodies are combined with each other in a relatively movable manner. The description to be associated with a specific type of mobile terminal or on a specific type of mobile terminal will be also typically applied to another type of mobile terminal.

Here, the terminal body may be understood as a conception which indicates the mobile terminal 100 as at least one assembly.

The mobile terminal 100 may include a case (casing, housing, cover, etc.) forming the appearance of the terminal. In this embodiment, the case may be divided into a front case 101 and a rear case 102. Various electronic components may be incorporated into a space formed between the front case 101 and the rear case 102. At least one middle case may be additionally disposed between the front case 101 and the rear case 102

A display unit 151 may be disposed on a front surface of the terminal body to output information. As illustrated, a window 151a of the display unit 151 may be mounted to the front case 101 so as to form the front surface of the terminal body together with the front case 101.

In some cases, electronic components may also be mounted to the rear case 102. Examples of those electronic components mounted to the rear case 102 may include a detachable battery, an identification module, a memory card and the like. Here, a rear cover 103 for covering the electronic components mounted may be detachably coupled to the rear case 102. Therefore, when the rear cover 103 is detached from the rear case 102, the electronic components mounted to the rear case 102 may be externally exposed.

As illustrated, when the rear cover 103 is coupled to the rear case 102, a side surface of the rear case 102 may be partially exposed. In some cases, upon the coupling, the rear case 102 may also be completely shielded by the rear cover 103. On the other hand, the rear cover 103 may include an opening for externally exposing a camera 121b or an audio output module 152b.

The cases 101, 102, 103 may be formed by injection-molding synthetic resin or may be formed of a metal, for example, stainless steel (STS), titanium (Ti), or the like.

Unlike the example which the plurality of cases form an inner space for accommodating such various components, the mobile terminal 100 may be configured such that one case forms the inner space. In this example, a mobile terminal 100 having a uni-body formed in such a manner that synthetic resin or metal extends from a side surface to a rear surface may also be implemented.

On the other hand, the mobile terminal 100 may include a waterproofing unit (not shown) for preventing an introduction of water into the terminal body. For example, the waterproofing unit may include a waterproofing member which is located between the window 151a and the front case 101, between the front case 101 and the rear case 102, or between the rear case 102 and the rear cover 103, to hermetically seal an inner space when those cases are coupled.

The mobile terminal 100 may include a display unit 151, first and second audio output modules 152a and 152b, a proximity sensor 141, an illumination sensor 152, an optical output module 154, first and second cameras 121a and 121b, first and second manipulation units 123a and 123b, a microphone 122, an interface unit 160 and the like.

Hereinafter, description will be given of an exemplary mobile terminal 100 that the display unit 151, the first audio output module 152a, the proximity sensor 141, the illumination sensor 142, the optical output module 154, the first camera 121a and the first manipulation unit 123a are disposed on the front surface of the terminal body, the second manipulation unit 123b, the microphone 122 and the interface unit 160 are disposed on a side surface of the terminal body, and the second audio output module 152b and the second camera 121b are disposed on a rear surface of the terminal body, with reference to FIGS. 1B and 1C.

Here, those components may not be limited to the arrangement, but be excluded or arranged on another surface if necessary. For example, the first manipulation unit 123a may not be disposed on the front surface of the terminal body, and the second audio output module 152b may be disposed on the side surface other than the rear surface of the terminal body.

The display unit 151 may output information processed in the mobile terminal 100. For example, the display unit 151 may display execution screen information of an application program driven in the mobile terminal 100 or user interface (UI) and graphic user interface (GUI) information in response to the execution screen information.

The display unit 151 may include at least one of a liquid crystal display (LCD), a thin film transistor-liquid crystal display (TFT-LCD), an organic light emitting diode (OLED), a flexible display, a 3-dimensional (3D) display, and an e-ink display. The display unit 151 may be implemented in two or more in number according to a configured aspect of the mobile terminal 100. For instance, a plurality of the display units 151 may be arranged on one surface to be spaced apart from or integrated with each other, or may be arranged on different surfaces.

The display unit 151 may include a touch sensor which senses a touch onto the display unit so as to receive a control command in a touching manner. When a touch is input to the display unit 151, the touch sensor may be configured to sense this touch and the controller 180 may generate a control command corresponding to the touch. The content which is input in the touching manner may be a text or numerical value, or a menu item which can be indicated or designated in various modes.

The touch sensor may be configured in a form of film having a touch pattern. The touch sensor may be a metal wire, which is disposed between the window 151a and a display (not shown) on a rear surface of the window 151a or patterned directly on the rear surface of the window 151a. Or, the touch sensor may be integrally formed with the display. For example, the touch sensor may be disposed on a substrate of the display or within the display.

The display unit 151 may form a touch screen together with the touch sensor. Here, the touch screen may serve as the user input unit 123 (see FIG. 1A). Therefore, the touch screen may replace at least some of functions of the first manipulation unit 123a.

The first audio output module 152a may be implemented in the form of a receiver for transferring voice sounds to the user's ear or a loud speaker for outputting various alarm sounds or multimedia reproduction sounds.

The window 151a of the display unit 151 may include a sound hole for emitting sounds generated from the first audio output module 152a. Here, the present disclosure may not be limited to this. It may also be configured such that the sounds are released along an assembly gap between the structural bodies (for example, a gap between the window 151a and the front case 101). In this case, a hole independently formed to output audio sounds may not be seen or hidden in terms of appearance, thereby further simplifying the appearance of the mobile terminal 100.

The optical output module 154 may output light for indicating an event generation. Examples of the event generated in the mobile terminal 100 may include a message reception, a call signal reception, a missed call, an alarm, a schedule notice, an email reception, information reception through an application, and the like. When a user's event checking is sensed, the controller may control the optical output unit 154 to stop the output of the light.

The first camera 121a may process video frames such as still or moving images obtained by the image sensor in a video call mode or a capture mode. The processed video frames may be displayed on the display unit 151 or stored in the memory 170.
The first and second manipulation units 123a and 123b are examples of the user input unit 123, which may be manipulated by a user to input a command for controlling the operation of the mobile terminal 100. The first and second manipulation units 123a and 123b may also be commonly referred to as a manipulating portion, and may employ any method if it is a tactile manner allowing the user to perform manipulation with a tactile feeling such as touch, push, scroll or the like.

The drawings are illustrated on the basis that the first manipulation unit 123a is a touch key, but the present disclosure may not be necessarily limited to this. For example, the first manipulation unit 123a may be configured with a mechanical key, or a combination of a touch key and a push key.

The content received by the first and second manipulation units 123a and 123b may be set in various ways. For example, the first manipulation unit 123a may be used by the user to input a command such as menu, home key, cancel, search, or the like, and the second manipulation unit 123b may be used by the user to input a command, such as controlling a volume level being output from the first or second audio output module 152a or 152b, switching into a touch recognition mode of the display unit 151, or the like.

On the other hand, as another example of the user input unit 123, a rear input unit (not shown) may be disposed on the rear surface of the terminal body. The rear input unit may be manipulated by a user to input a command for controlling an operation of the mobile terminal 100. The content input may be set in various ways. For example, the rear input unit may be used by the user to input a command, such as power on/off, start, end, scroll or the like, controlling a volume level being output from the first or second audio output module 152a or 152b, switching into a touch recognition mode of the display unit 151, or the like. The rear input unit may be implemented into a form allowing a touch input, a push input or a combination thereof.

The rear input unit may be disposed to overlap the display unit 151 of the front surface in a thickness direction of the terminal body. As one example, the rear input unit may be disposed on an upper end portion of the rear surface of the terminal body such that a user can easily manipulate it using a forefinger when the user grabs the terminal body with one hand. However, the present disclosure may not be limited to this, and the position of the rear input unit may be changeable.

When the rear input unit is disposed on the rear surface of the terminal body, a new user interface may be implemented using the rear input unit. Also, the aforementioned touch screen or the rear input unit may substitute for at least part of functions of the first manipulation unit 123a located on the front surface of the terminal body. Accordingly, when the first manipulation unit 123a is not disposed on the front surface of the terminal body, the display unit 151 may be implemented to have a larger screen.

On the other hand, the mobile terminal 100 may include a finger scan sensor which scans a user's fingerprint. The controller may use fingerprint information sensed by the finger scan sensor as an authentication means. The finger scan sensor may be installed in the display unit 151 or the user input unit 123.

The microphone 122 may be formed to receive the user's voice, other sounds, and the like. The microphone 122 may be provided at a plurality of places, and configured to receive stereo sounds.
The interface unit 160 may serve as a path allowing the mobile terminal 100 to exchange data with external devices. For example, the interface unit 160 may be at least one of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b may be further mounted to the rear surface of the terminal body. The second camera 121b may have an image capturing direction, which is substantially opposite to the direction of the first camera unit 121a.

The second camera 121b may include a plurality of lenses arranged along at least one line. The plurality of lenses may also be arranged in a matrix configuration. The cameras may be referred to as an 'array camera.' When the second camera 121b is implemented as the array camera, images may be captured in various manners using the plurality of lenses and images with better qualities may be obtained.

A flash 124 may be disposed adjacent to the second camera 121b. When an image of a subject is captured with the camera 121b, the flash 124 may illuminate the subject.
The second audio output module 152b may further be disposed on the terminal body. The second audio output module 152b may implement stereophonic sound functions in conjunction with the first audio output module 152a (refer to FIG. 1A), and may be also used for implementing a speaker phone mode for call communication.

At least one antenna for wireless communication may be disposed on the terminal body. The antenna may be installed in the terminal body or formed on the case. For example, an antenna which configures a part of the broadcast receiving module 111 (see FIG. 1A) may be retractable into the terminal body. Alternatively, an antenna may be formed in a form of film to be attached onto an inner surface of the rear cover 103 or a case including a conductive material may serve as an antenna.

A power supply unit 190 (refer to FIG. 1A) for supplying power to the mobile terminal 100 may be disposed on the terminal body. The power supply unit 190 may include a batter 191 which is mounted in the terminal body or detachably coupled to an outside of the terminal body.

The battery 191 may receive power via a power source cable connected to the interface unit 160. Also, the battery 191 may be (re)chargeable in a wireless manner using a wireless charger. The wireless charging may be implemented by magnetic induction or electromagnetic resonance.
On the other hand, the drawing illustrates that the rear cover 103 is coupled to the rear case 102 for shielding the battery 191, so as to prevent separation of the battery 191 and protect the battery 191 from an external impact or foreign materials. When the battery 191 is detachable from the terminal body, the rear case 103 may be detachably coupled to the rear case 102.

An accessory for protecting an appearance or assisting or extending the functions of the mobile terminal 100 may further be provided on the mobile terminal 100. As one example of the accessory, a cover or pouch for covering or accommodating at least one surface of the mobile terminal 100 may be provided. The cover or pouch may cooperate with the display unit 151 to extend the function of the mobile terminal 100. Another example of the accessory may be a touch pen for assisting or extending a touch input onto a touch screen.

Hereinafter, preferred embodiments related to a control method which can be implemented in the mobile terminal will be explained in more detail with reference to the attached drawings. It is obvious to those skilled in the art that the present features can be embodied in several forms without departing from the characteristics thereof.

The present disclosure proposes a method capable of registering a wish list to a user profile to send and receive a gift through the wish list.

The profile as a profile registered to an SNS, a messenger or an SMS, may include user information.

When a preference article (or item) is registered to the wish list, a list registration icon may be displayed on the profile to allow another to identify it.

The preference article as an item registered by a user who wants to receive a gift, may be changed, added or deleted according to the user's selection. Information of recommending an exchange of an item worn by the user based on the user's pattern information sensed through a sensor of a device may be displayed on a wish list of the user profile.

A wish list according to the present disclosure may apply a privacy function to show it only to a person desired to receive a gift from him or her. In other words, when registering a wish list, a security function may be set to indicate a user desired to receive a gift from him or her, thereby preventing a gift from being received from a user desired not to receive.

The present disclosure may be applicable to a wearable device and a mobile terminal, and for the sake of convenience of explanation, the registration of a preference article and the sending and receiving of a preference article using a wish list will be described by taking a wearable device, more particularly, a smart watch as an example.

### 1. Register wish list

A wish list proposed by the present disclosure may be linked to a user profile. When a user's profile is selected, an icon capable of registering a wish list may be displayed at one side of a profile screen. According to the present disclosure, the icon may be referred to as a wish list icon. The location and size of the wish list may be preset, and may be changed according to the user's setting.

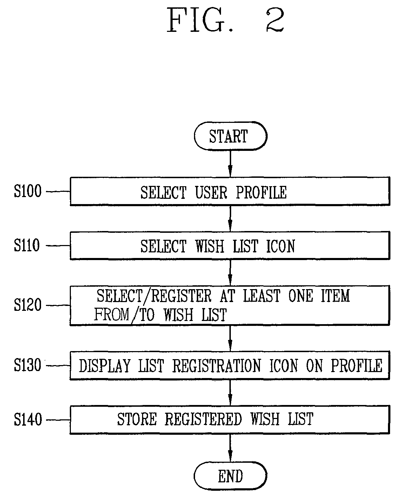

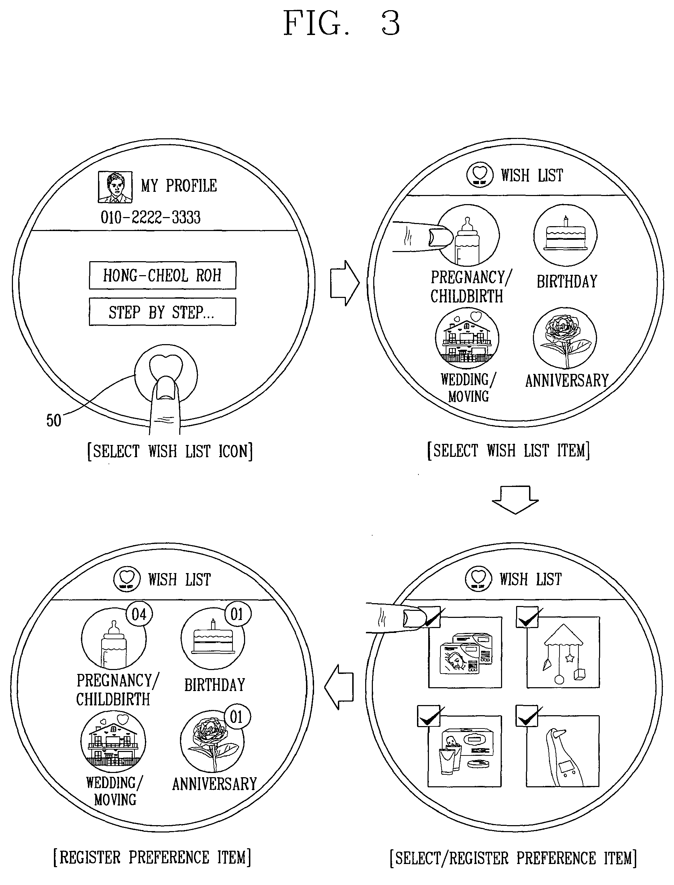

FIG. 2 is a flow chart illustrating the operation of registering a wish list to a profile according to an embodiment of the present disclosure, and FIG. 3 is a specific embodiment thereof.

As illustrated in FIGS. 2 and 3, when a predetermined user's profile is selected (S100), the controller 180 displays a wish list icon 50 along with the specific information of the user on the display unit 151 of a smart watch in response to the selection (S110).

When the wish list icon 50 is selected, the controller 180 may display at least one or more wish list items included in a wish list. The wish list item indicates a category of preference items, and an image indicating the attribute of the category may be displayed along with text. For an example, the wish list item may include pregnancy/childbirth, birthday, wedding/moving, anniversary, and the like. Each wish list item may include a plurality of preference items that can be registered by a user. Hereinafter, a wish list item will be used to have the same meaning as that of a gift category.

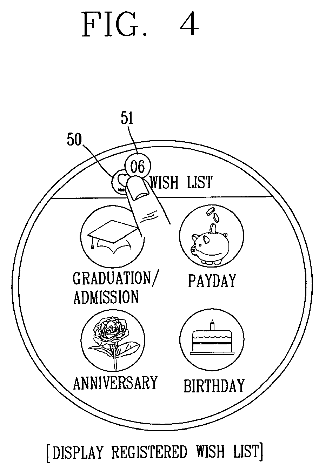

A user may select a wish list item to select and register at least one preference item desired to receive as a gift for himself or herself (S120). For an example, when a wish list item associated with pregnancy/childbirth is selected, the controller 180 displays a plurality of preference items associated with pregnancy/childbirth. The user may select and register his or her desired preference item among the plurality of preference items, and when the selection and registration is completed, the controller may display a number of preference items registered to each wish list item. Furthermore, the numbers of preference items displayed on the each wish list item are summed up and displayed as a wish list registration icon 51 on the profile as illustrated in FIG. 4 which will be described later (S130). The wish list registration icon 51 may be displayed to overlap with part of a wish list icon.

Then, when the registration of a wish list to a profile is completed, the controller 180 stores registration information in the memory 170 (S140). As described above, a first user may register preference items desired to receive from another user to his or her own wish list of a profile, and a second user may access the first user's profile to check the wish list registered by the first user. Hereinafter, a user desired to receive a gift and a user desired to present a gift are assumed as user A and user B, respectively.

### 2. Display registered wish list

According to the present disclosure, a wish list registered by the user A may be basically checked when a profile is selected by the user A or B. However, the present disclosure may not be necessarily limited to this, and it may be also possible to know whether or not a wish list is registered without selecting the profile.

FIG. 4 is an example of display a wish list registered to a profile.

As illustrated in FIG. 4, when a wish list is registered to a profile, the controller 180 displays a wish list registration icon 51 at one side of the wish list icon 50. A total number of preference items registered to each wish list item is displayed on the wish list registration icon 51.

When the wish list registration icon 51 is selected, the controller 180 may display a preference item registered to each wish list item in response thereto.

Though not shown in the drawing, according to another embodiment, when a representative image of the user A is displayed even though a user profile is not accessed, the controller 180 may display the wish list icon 50 on the representative image to indicate whether or not the wish list is registered. The representative image is displayed during a group chat as well as a one-to-one chat (text or voice) while performing an instant message (IM) service. When the registration or non-registration of a wish list is displayed according to such a method, the user B may access a profile of the user A to check whether the user A has registered any preference item to a wish list.

Though not shown in the drawing, according to still another embodiment, the controller 180 may automatically transmit the registered wish list of the user A to a smart watch or mobile terminal of another user (friend, family member, etc.) to share it (share wish list information). The transmitted wish list may be notified to another user, and for an example, displayed on a contact list. A subject to which the wish list is transmitted may be set by the user A in advance through menu setting. Accordingly, the user B who has received the wish list may check a wish list registered by the user A from a background screen or contact information to present a preference item required by the user A as a gift.

### 3. Present item registered to wish list as gift

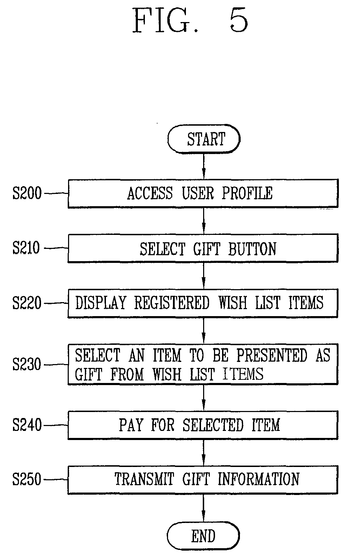

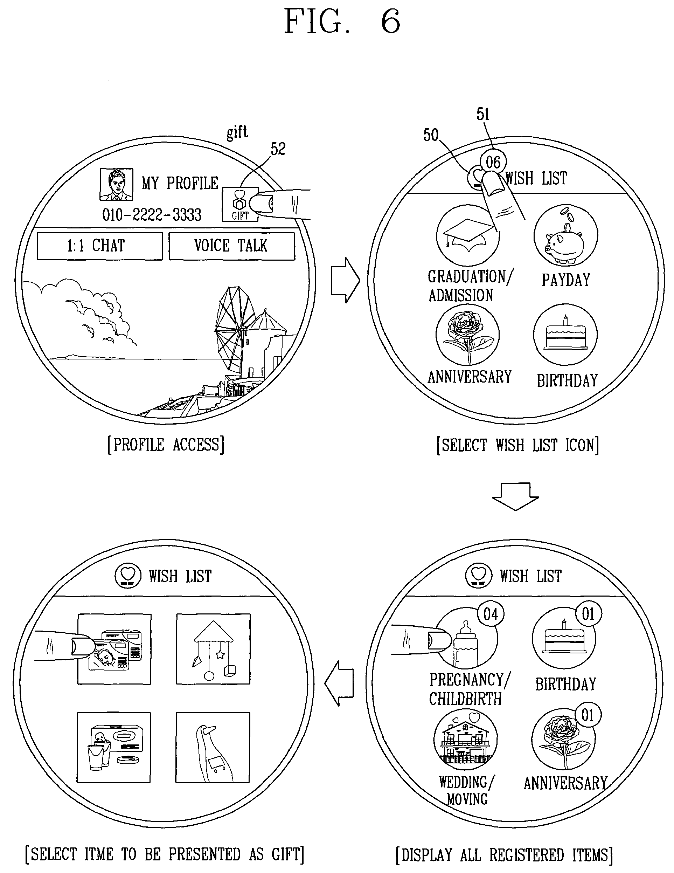

FIG. 5 is a flow chart of presenting an item using a wish list registered to a profile according to the present disclosure, and FIG. 6 is a specific example thereof. The user B may access the profile of the user A through his or her own smart watch or mobile terminal to check the registration information of a wish list. Furthermore, the user B may also check the registration information of a wish list registered by a user based on the shared wish list of the user A.

As illustrated in FIGS. 5 and 6, when the user B accesses the profile of the user A and then selects a gift button 52 (S210), the controller 180 switches the screen to a wish list screen to display the wish list icon 50 and the wish list registration icon 51. In other words, when the gift icon 52 is selected, the controller 180 displays a wish list registered by the user A and a general gift category in a distinguished manner. For an example, the controller 180 may display a wish list registered by the user A at an upper end of the screen, and display a general gift category that is not registered as a wish list by the user A in the remaining region thereof.

The user B may select the wish list icon 50 or wish list registration icon 51 to check preference items on a wish list registered by the user A. According to an embodiment, as illustrated in FIG. 6, when the wish list icon 50 is selected, the controller 180 displays at least one wish list item registered by the user A (S220). Subsequently, when a pregnancy/childbirth category (item) is selected from the wish list items, the controller 180 displays at least one or more preference items registered to the relevant category in response thereto.

Accordingly, the user B may select a specific preference item to present it to the user A as a gift (S230). When the user B selects a specific preference item, the controller 180 may provide information associated with the selected preference item. The controller 180 may provide the URL information of a maker who sells the relevant preference item in response to the selection of a preference item by the user B. Moreover, the controller 180 may directly access a website of the relevant maker using URL information linked to the selected preference item in response to the selection of a preference item by the user B. Accordingly, the user may access a website using the URL information, and perform a payment transaction for the selected preference item according to a payment process provided by the website. When a payment transaction for the preference item is completed, the mobile terminal of the user B transmits gift information to the terminal of the user A (S250). The gift information may be output in a visual and auditory manner on a standby screen of the smart watch or profile of the user A.

As described above, the user A wants to receive his or her desired item if possible as a gift from another user. To this end, the user A may deactivate his or her wish list items (general gift category) desired not to receive through a separate option. Such an operation may provide an effect of highlighting preference items registered to a wish list to the counter user.

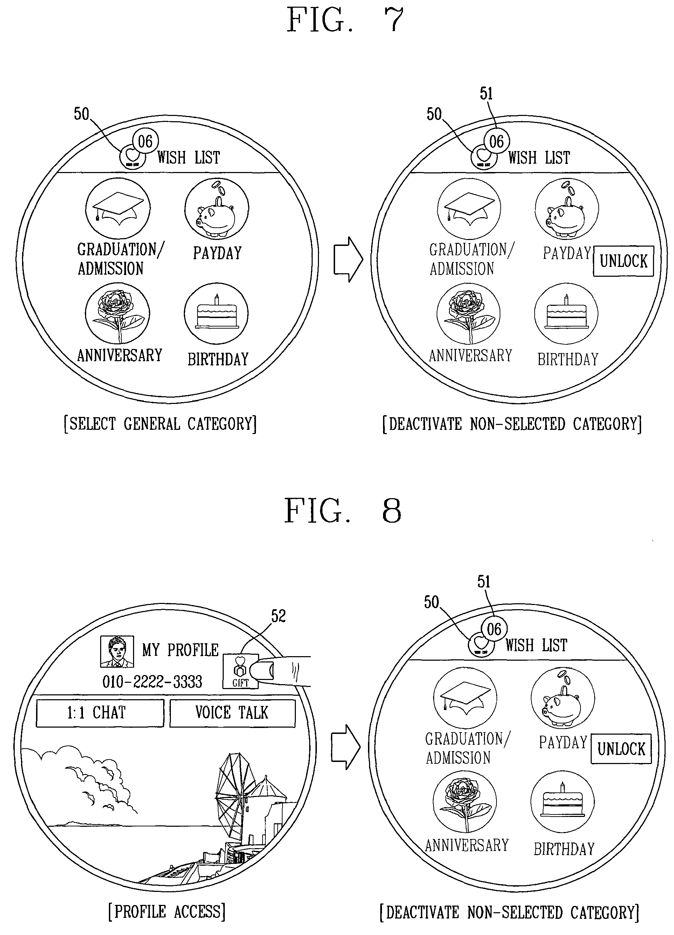

FIG. 7 is an example of deactivating a gift category desired not to receive as a gift, and FIG. 8 is an example of allowing another user to check a wish list registered to a profile.

As illustrated in FIG. 7, when the registration of a wish list is completed, the controller 180 may display the wish list icon 50 to which a total number of preference items registered by the user A are added at an upper end of the wish list screen, and display general gift categories that are not registered as a wish list at a lower end thereof.

The general gift categories that are not registered as a wish list may be deactivated according to a user input. For an example, when the user A selects a locked item from a menu, the controller 180 may deactivate the general gift categories. For another example, when a region displayed with a general gift category is long-touched, the controller 180 may provide a lock button, and then deactivate a gift category that is not registered as the wish list in response to a user's input for selecting the lock button. The deactivated gift categories may be collectively released through an unlock button.

Then, as illustrated in FIG. 8, when the user B accesses the profile of the user A to select the gift button 52, the controller 180 displays an icon 50, 51 associated with a wish list registered by the user A at an upper end thereof, and displays deactivated gift categories and an unlock button at a lower end thereof.

Accordingly, the user B may typically select the icon 50, 51 associated with a wish list registered by the user A displayed at an upper end thereof to present an article desired by the user A as a gift. The reason is because there is a burden to perform an additional operation of selecting an unlock button to activate a deactivated gift category to present an article included in the deactivated gift category.

Though not shown in the drawing, according to another embodiment, the present disclosure may additionally select a privacy menu (or button) to set security for a wish list when registering the wish list. In other words, a security function may be applied to set a range of users desired to receive a gift from them when registering the wish list. The range of users may be set for each individual or group (e.g., family members, friends).

When security is set to the wish list, the controller 180 may check whether or not the security is set thereto when a predetermined user accesses the profile of the user A to determine whether or not to display the wish list. For an example, when the user A sets security to the user B desired to receive a gift from him or her among the users B and C, the controller 180 may display a wish list when the user B accesses the profile of the user A, but does not display the wish list when accessing the user C.

On the other hand, the present disclosure proposes a scheme of not only registering a preference item desired to receive as a gift to a wish list but also registering a preference item by reflecting a user's taste on the wish list.

To this end, the user may register the attribute of a preference item to a wish list. The attribute of the preference item may include a maker who provides and sells the preference item, a place, and a type of preference item. For example, when the preference item is a coffee, the user A may specifically select and register a name of coffee shop and a type of coffee to the wish list.

Accordingly, the user B may know a taste, namely, the attribute of preference items of the user A from the profile of the user A, and based on this, select and present a coffee shop and a type of coffee preferred by the user A as a gift.

### 4. Register wish list on which user taste is reflected

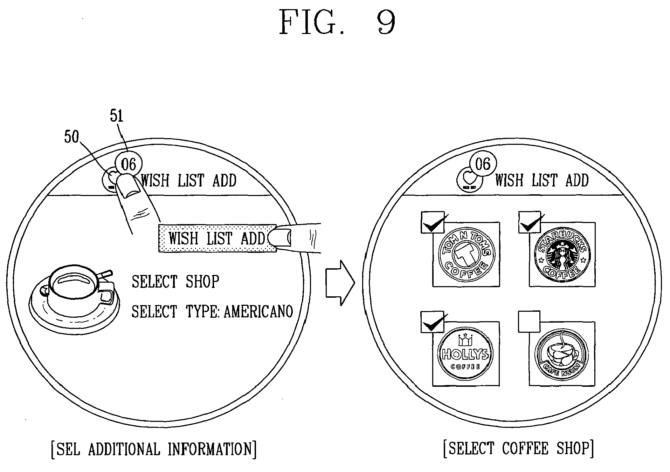

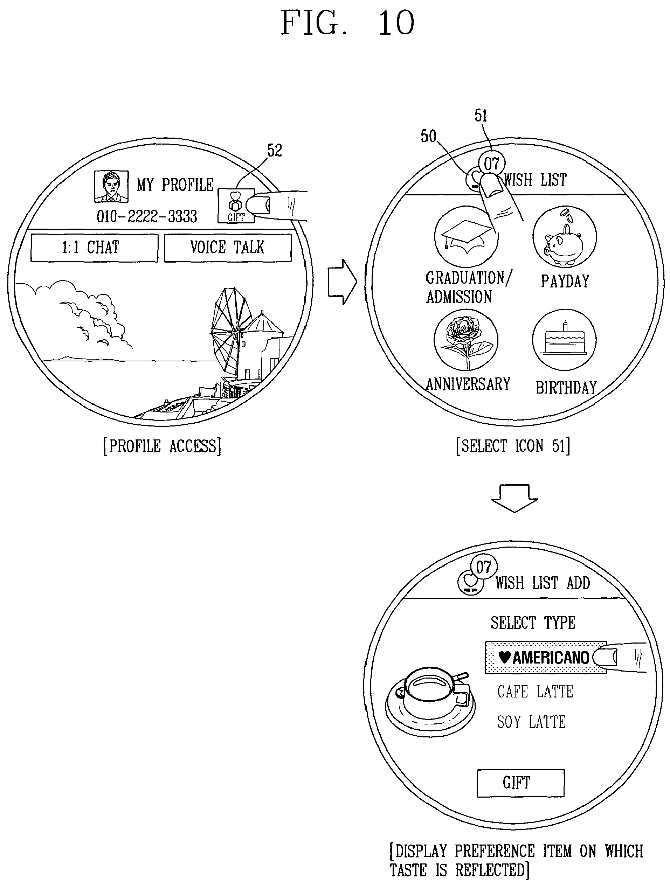

FIG. 9 is an embodiment of reflecting a user's taste on a wish list to register a preference item, and FIG. 10 is an example of checking a wish list on which a user's taste is reflected from a profile.

The user A may select the wish list registration icon 51 to additionally set his own taste information, namely, attribute information on preference items to a previously registered preference item. If a preference item is initially registered, then a menu may be selected to set the attribute information.

The taste information may include a type of preference item and a name of maker who sells or produces the preference item.

When the wish list registration icon 51 is selected, as illustrated in FIG. 9, the controller 180 may switch the screen to a wish list add screen to display an option, for example, a "wish list add" button capable of setting additional information along with a previously registered preference item on the screen.

An initially registered preference item (e.g., coffee) may be displayed or a most recently registered preference item may be displayed on the wish list add screen. The controller 180 may sequentially display the remaining preference items registered by the user A in response to a drag in a horizontal direction entered by the user A.

When a wish list add button is selected by the user A, the controller 180 may display a coffee shop list to allow the user A to select a coffee shop (e.g., Starbucks, Caffebene). When the selection of a coffee shop is completed, the controller 180 may display the types of coffees provided by the relevant coffee shop to allow the user A to set a type of coffee (e.g., Americano). At this time, the controller 180 deactivates coffee shops and types of coffees that are not selected by the user A.

In this manner, when the user A sets the maker and type of a preference item desired to received from another user to a wish list, the user B may recognize that the user A likes Starbucks Americano but does not like Tom and Toms Americano from the profile of the user A and present the relevant preference item to the user A as a gift.

Though not shown in the drawing, according to another embodiment, the controller 180 may set attribute information (or taste information) on each preference item in response to an input at the time when the user A initially registers a preference item to a wish list.

The preference item and attribute information of the user A set to a wish list as described above is stored in the memory 170.

Then, when the user B accesses the profile of the user A to select the gift button 52, as illustrated in FIG. 10, the controller 180 displays the wish list icon 50 and wish list registration icon 51 registered by the user A at an upper end thereof, and displays general gift categories that are not registered as a wish list by the user A at a lower end thereof. The general gift categories may be deactivated according to a user's lock setting (refer to FIG. 7). In particular, when the user A additionally sets Starbucks and Americano as the attribute information (shop and type) indicating his or her taste to a preference item (e.g., coffee), the controller 180 updates (6 → 7) and displays a number of preference items displayed on the wish list registration icon 51. The user B may select the registered preference item to check the type of the relevant item (e.g., Americano). At this time, the shop (e.g., Starbucks) and type (e.g., Americano) of an item selected by the user A may be highlighted, displayed in an enlarged manner or displayed in a different type of text to be distinguished from the shops and types of non-selected items. Furthermore, the controller 180 may sequentially display preference items on which the remaining preference items or attributes registered by the user A are reflected in response to a drag in a horizontal direction entered by the user A.

Accordingly, the user B may press a "gift" button to present a "Americano" of "Starbucks" registered by the user A to the user B in a convenient manner. In general, groceries or favorite foods are purchased at places at a near distance. However, if a Starbucks coffee at 30 minutes distance by car is received as a gift from the user B in a state that there is only "Caffebene" near home, for example, then the user A will be embarrassed.

Taking the problem into consideration, the present disclosure proposes a scheme of setting the location (distance) information of a preference item when registering a wish list to a profile. In other words, distance information as well as a maker of the preference item, and a type of the preference item may be specified to receive an item sold by a maker located near home.

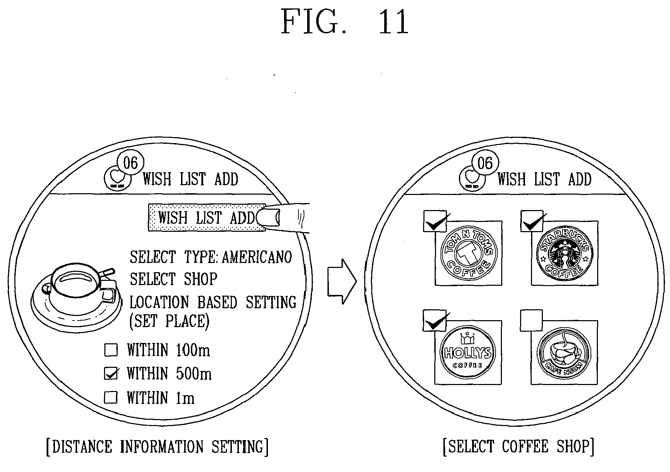

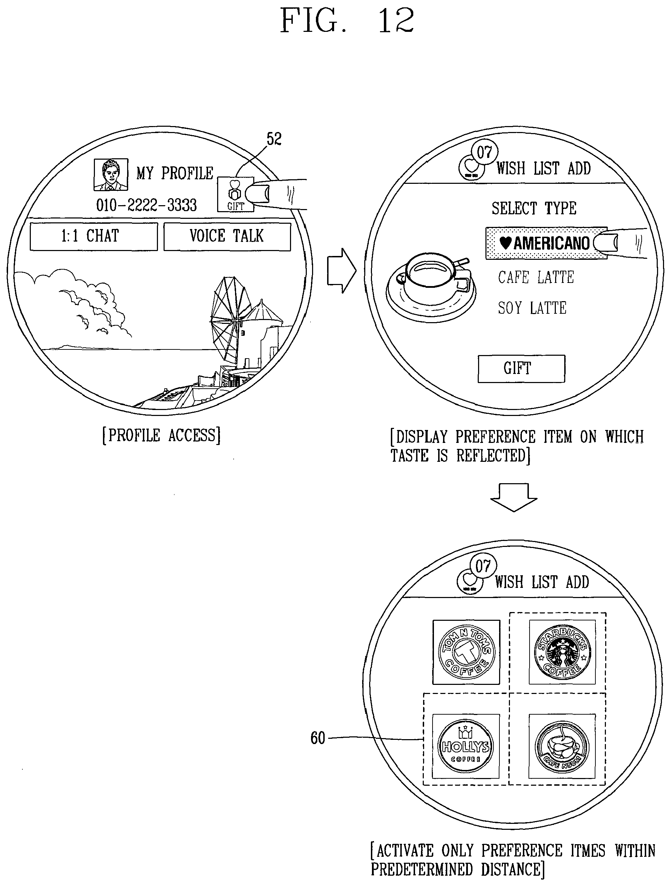

FIG. 11 is another embodiment of reflecting a user's taste on a wish list, and FIG. 12 is another example of checking a wish list on which a user's taste is reflected from a profile.

As illustrated in FIG. 11, when the attribute information of a preference item is set in FIG. 10, the controller 180 may set a maker associated with the preference item as well as distance information to the relevant maker to a wish list according to a user input. In other words, the user A may set a coffee shop within a predetermined distance. For an example, as illustrated in FIG. 11, the user A may set the distance to "within 200 m" and then select a coffee shop within the relevant distance.

Accordingly, when the user B accesses the profile of the user A and then selects the detailed information of a registered preference item (e.g., coffee) in FIG. 12, the controller 180 activates only coffee shops within 200 m, and deactivates coffee shops 60 that are not within 200 m, among preference coffee shops registered by the user A, based on distance information set to the coffee in response thereto.

For the sake of convenience of explanation, though FIGS. 9 and 11 have been separately described from each other, in actuality they can be carried out in a sequential operation to set attribute information.

On the other hand, when the user B shops online, there may exist an item desired to purchase for the user A though it is an item (article) that is not registered to the wish list of the user A. In this case, the user B may pay for the relevant item, and allow the user A to select the color and size thereof.

Accordingly, the present disclosure proposes a scheme of separating the payment of an item from the selection of an option to present a gift. Here, separating the payment of an item from the selection of an option may denote that the user A pays for an item and the user B performs option selection, for example.

### 5. Present item that is not registered to wish list as gift

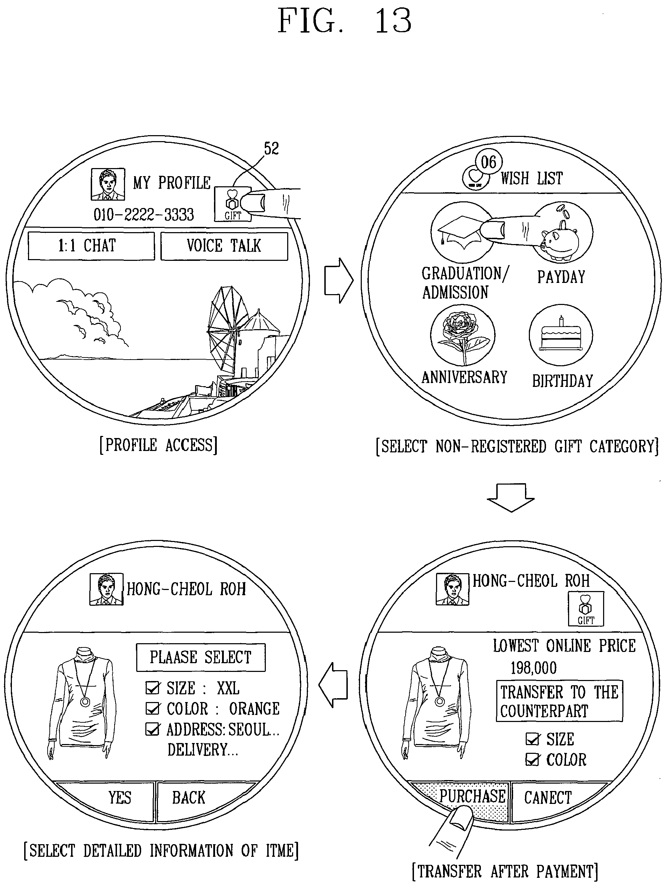

FIG. 13 is an embodiment of presenting an item that is not registered to a profile as a gift.

As illustrated in FIG. 13, when the user B accesses the profile of the user A, and then presses a gift button, the controller 180 displays a wish list icon and a wish list registration icon registered by the user A at an upper end thereof, and displays gift categories that are not registered as a wish list by the user A at a lower end thereof.
When the user B selects any one of the non-registered gift categories in this state, the controller 180 provides an option capable of presenting an item (e.g., cloth) associated with the selected gift category as a gift in response thereto.

In response to the selection of a non-registered gift category by the user B, the controller 180 may provide the URL information of an online shopping mall associated with the relevant gift category or analyze the user's search history to immediately access an online shopping mall frequently used by the user B. When the user B searches an item to be presented as a gift to the user A on an online shopping mall, the controller 180 may display a "transfer" button in addition to the basic information (item image, color and price) of the item.

Accordingly, when the user B selects the "transfer" button and then performs a payment transaction for the item, the controller 180 transmits information indicating that the user B has presented a gift to the user A to the terminal of the user A. The notification may be displayed to be distinguished from information displayed when an item registered to a wish list is presented as a gift. At this time, gift information presented by the user B may be displayed in an icon shape in a region displayed with a wish list icon on the profile of the user A.

The user A may check the notification and then check an item presented as a gift by the user B on his or her own profile. When a gift icon is selected on the profile, the controller 180 displays "product purchase" and "product exchange" buttons along with an item presented as a gift by the user B. As illustrated in FIG. 10, the user A may select the "product purchase" button to enter a shipping address while selecting the size and color of the item presented by the user B. When the shipping address is entered and the check button is selected, the controller 180 transmits the relevant information to a sales company through the wireless communication unit 110, and the sales company starts shipping to the address selected by the user A. In other words, the user A enters the detailed description of the item received as a gift to complete a gift receipt.

Accordingly, even if the user B does not know the size, address and phone number of the user A, he or she may conveniently present an item desired by himself or herself by performing a payment transaction to the relevant item.

On the other hand, though the user A receives a prepaid item (e.g., cloth) as a gift, there may exist a case where he or she has received an item being the same or similar to the item several days ago from a user C. In this case, the user A may exchange the item received as a gift from the user B with another item (e.g., robot).

### 6. Exchange item received as gift

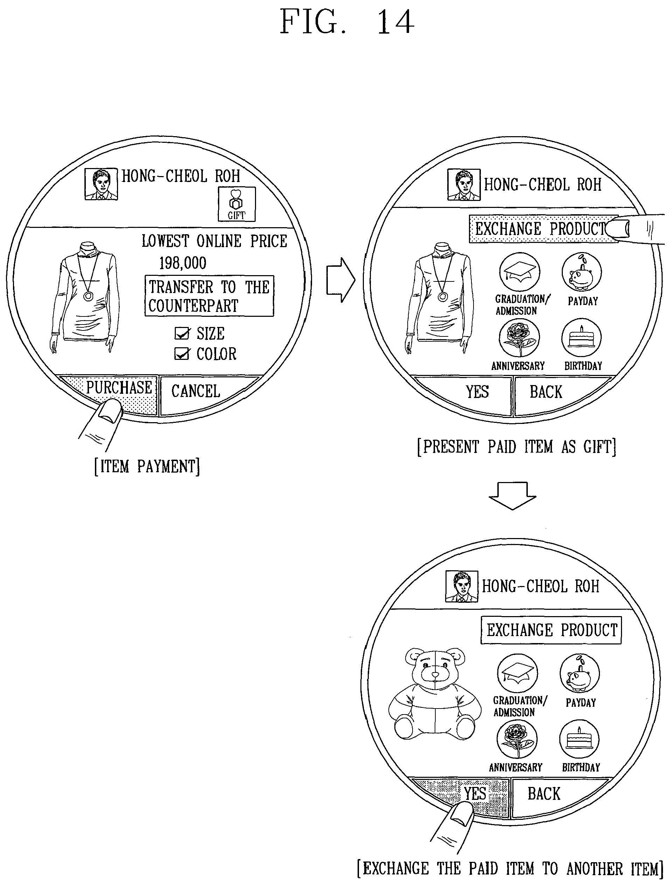

FIG. 14 is an embodiment of exchanging a gift received payment item through a profile.

As illustrated in FIG. 14, when the user B pays for an item (e.g., cloth) and then presents it as a gift to the user A, gift information is notified to the profile of the user A.

When the user A selects a gift icon, the controller 180 may display the "product purchase" and "product exchange" buttons along with a first item presented as a gift by the user B. When the user A selects the "product exchange" button, the controller 180 displays gift categories capable of selecting another item.

Then, when the user A selects a second item (e.g., robot) is selected from a specific gift category, the controller 180 displays a screen on which a shipping address is to be entered. When the user A enters an address to be shipped and presses the YES button on the screen, the controller 180 transmits item information entered by the user A to a sales company, and the sales company starts the shipping of the robot to an address selected by the user A.

Accordingly, through the foregoing series of operations, the user A may exchange an item (e.g., cloth) presented as a gift by the user B with his or her son's favorite item (e.g., robot).

On the other hand, there is a case where a user has found a pretty cloth while shopping offline and completed payment but is unable to carry it home due to a large volume thereof. In this case, it is typical to perform a payment transaction first, and request shipment through a courier service, but there is a risk of exposing personal information since personal information such as address and phone number should be notified upon requesting shipment through a courier service.

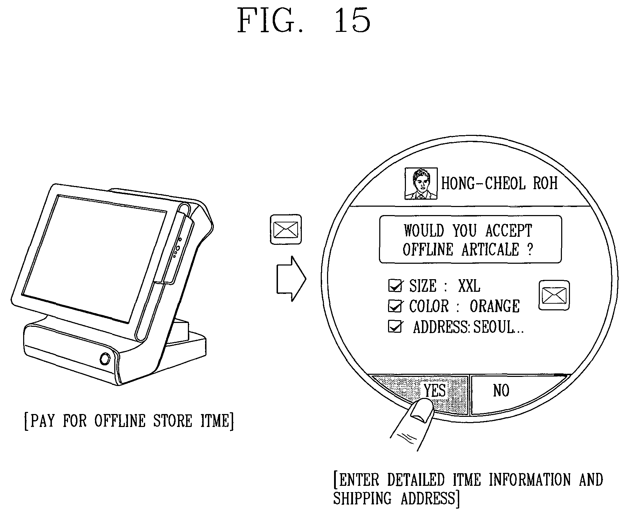

Accordingly, the present disclosure proposes a scheme of checking the delivery of an offline paid item and requesting/cancelling the purchase on online. FIG. 15 is an embodiment of requesting the delivery of an offline paid item on online.

As illustrated in FIG. 15, the user B visits an offline store to select an item (e.g., cloth) and then performs a payment transaction, and requests a store staff to transmit information of asking whether or not to receive an offline item as a gift to the user A. According to the request, the store staff transmits information of requesting the delivery of the offline item to the user A through a terminal device he or she is carrying. The information may include an item on which the detailed information (size, color, shipping address etc.) of an article is to be entered and a message of accepting the delivery of the article. The information is transmitted to the user A, and when the information is transmitted, the mobile terminal of the user A generates and displays a gift icon on a wish list.

Then, the user A selects a gift icon on his or her own wish list, and the controller 180 displays an item (e.g., cloth) received as a gift in response to the selection. The user A checks an item presented as a gift by the user B, and then when he or she is pleased with it, enters the size, color and shipping address of the item as described above and then presses the YES button to accept the delivery of the item. In other words, the user A enters the detailed description of the item received as a gift to complete a gift receipt.

When the check button (YES button) is pressed, the controller 180 transmits the detailed description entered by the user again to the terminal device of the store, and the store staff recognizes that the purchase of the relevant article has been finally completed and requests the article to be delivered to the shipping address entered by the user. On the contrary, when the user presses the NO button to disapprove the delivery of the article, the store recognizes that the transaction on offline has been cancelled, and makes a refund for a previously paid card amount.

Accordingly, when the foregoing payment method is applied, it may be possible to minimize financial losses due to impulsive purchases because of protecting personal information as well as requesting the acceptance of an article to a user who receives a gift so as to determine whether or not to carry out secondary purchase.

On the other hand, various sensors capable of measuring health information are mounted on a recent smart watch or mobile terminal to measure a user's biometric information (blood pressure, heart rate, exercise amount, etc.) through the sensors so as to provide various additional information (exercise information, diet information) associated with the user's living pattern.

For an example, it may be possible to know the status (bike/standing/running/sleep) of a user through an acceleration sensor, and measure exercise intensity based on the user's stress index, heart rate and heartbeat using a heart rate sensor, and measure galvanic skin reflex (GSR) and skin temperature to calculate calorie burn.
Accordingly, the present disclosure proposes a scheme capable of knowing a user's living pattern (or lifestyle) using various sensors mounted on a wearable device or mobile terminal, and guiding an article suitable to his or her exercise intensity or exercise purpose when it is the time to replace the user's worn article based on this. An article worn by the user may be an article associated with exercises, for example, footwear (running shoes, golf shoes).

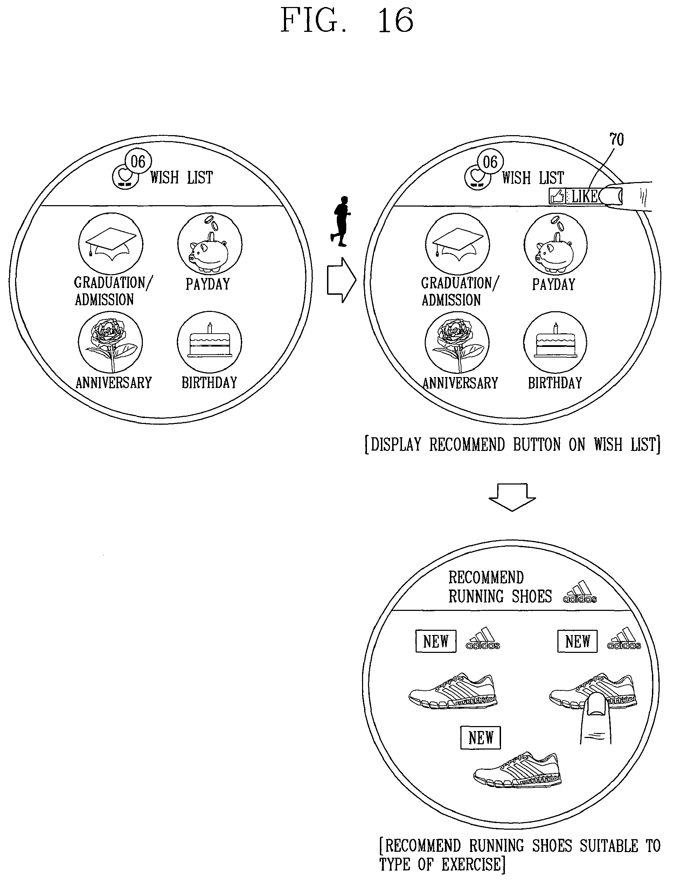

FIG. 16 is an embodiment of acquiring a user's lifestyle to guide a replacement of an article according to exercise intensity or purpose.

As illustrated in FIG. 16, the controller 180 may receive sensed information from various sensors attached to a smart watch to measure a user's exercise amount and exercise intensity. The controller 180 determines the replacement time of an article associated with exercises based on a measurement result and then automatically generates a button 70 for recommending sneakers on a wish list. based on the measured exercise amount and exercise intensity. For an example, the controller 180 determines a replacement time of sneakers based on the measured exercise amount and exercise intensity, and then generates the button 70 for recommending sneaker on a wish list
When the recommend button 70 is selected, the controller 180 displays sneakers suitable to the type of exercise (jogging, golf, etc.) being carried out by the user for each maker, and the user views sneakers for each maker according to the displayed type of exercise to purchase sneakers.

As described above, the present disclosure may register a wish list to a user's profile to allow another user to know a preference item from the wish list and present a gift to the user, thereby solving a disadvantage of receiving the user's unwanted item as a gift or receiving the same item as a gift in a redundant manner. Furthermore, the present disclosure may register a preference item on which a user's taste (a type of item, a maker, a distance from the maker) is reflected to a wish list, thereby having an advantage capable of allowing the user to conveniently use his or her desired gift at a near distance.

The foregoing present invention may be implemented as codes readable by a computer on a medium written by the program. The computer-readable media may include all kinds of recording devices in which data readable by a computer system is stored. Examples of the computer-readable media may include ROM, RAM, CD-ROM, magnetic tape, floppy disk, and optical data storage device, and the like, and also include a device implemented in the form of a carrier wave (for example, transmission via the Internet). In addition, the computer may include the controller 180 of the mobile terminal. Accordingly, the detailed description thereof should not be construed as restrictive in all aspects but considered as illustrative. The scope of the invention should be determined by reasonable interpretation of the appended claims and all changes that come within the equivalent scope of the invention are included in the scope of the invention.

## Claims

1. A profile management method of a mobile terminal, the profile management method comprising:
registering (S100~S120) a preference item to a wish list formed in a first user's profile;
allowing (S200) a second user to access the first user's profile; and
presenting (S230) an item to the first user as a gift in response to the second user's selection of a previously registered preference item from a wish list of the accessed profile.

2. The profile management method of claim 1, wherein when the preference item is selected, a gift icon indicating that the item has been presented as a gift is generated on the wish list,
wherein the profile comprises an SNS profile, an SMS profile and a messenger profile, and
wherein the wish list comprises at least one or more gift categories having a plurality of preference items.

3. The profile management method of claim 1, wherein said registering a preference item to a wish list comprises:
displaying (S200~S220) a plurality of gift categories when a wish list icon is selected;
selecting (S230) a preference item from a specific gift category among the plurality of gift categories; and
storing the selected preference item,
wherein the remaining gift categories for which any preference item is not selected from the plurality of gift categories are deactivated.

4. The profile management method of claim 3, further comprising:
displaying a previously registered preference item when the wish list registration icon is selected; and
setting a user's taste information and distance information to the displayed preference item,
wherein the preference information comprises a type of preference item and a company name of selling or producing the preference item.

5. The profile management method of claim 1, further comprising:
setting a privacy function to the registered wish list in response to the first user's input,
wherein when the privacy function is set, a registered wish list is displayed only for a specific user.

6. The profile management method of claim 1, wherein said presenting a gift comprises:
making (S240) a payment for the selected preference item; and
transmitting (S250) information of notifying that an item has been presented to the first user as a gift along with the paid item information when the payment is completed.

7. The profile management method of claim 1, further comprising:
presenting an item to the first user as a gift in response the second user's access to the first user's profile to select the relevant item that is not registered to a wish list, wherein said presenting a gift comprises:
making a payment for the selected item;
transferring the delivery of the paid item to the first user; and
transmitting the paid item information along with information of notifying that the item has been presented as a gift to the first user when the delivery is transferred,
wherein the first user enters delivery information on the gift received item to complete a gift receipt or selects another gift category to exchange the gift received item with another item.

8. The profile management method of claim 1, further comprising:
presenting an item to the first user as a gift in response to the second user's purchase of the item on an offline store,
wherein the offline store transmits information of requesting the delivery of the paid item to the first user, and the first user enters delivery information on the item to complete a gift receipt.

9. A mobile terminal (100), comprising:
a display unit (151) configured to display a profile of a first user; and
a controller (180) configured to transmit information of notifying that a predetermined item has been presented as a gift along with item information to the first user in response to a second user's selection of a relevant preference item from a wish list registered to the first user's profile.

10. The mobile terminal of claim 9, wherein when an item is presented as a gift, the controller (180) of the first user terminal generates a gift icon on the first user's wish list,
wherein the profile comprises an SNS profile, an SMS profile and a messenger profile, and
wherein the wish list comprises at least one or more gift categories having a plurality of preference items.

11. The mobile terminal of claim 9, wherein the controller (180) of the first user terminal displays a plurality of gift categories when a wish list icon is selected, and displays a wish list registration icon on a wish list icon while storing a preference item when the relevant preference item is selected from the gift category, and deactivates the remaining gift categories for which any item is not selected from the plurality of gift categories.

12. The mobile terminal of claim 9, wherein when a wish list registration icon is selected, the controller (180) displays a previously registered item, and sets a user's entered preference information and distance information to the displayed item,
wherein the preference information comprises a type of preference item and a maker name of selling or producing the preference item.

13. The mobile terminal of claim 9, wherein the controller (180) of the first user terminal sets a privacy function to the registered wish list according to the first user's selection, and a registered wish list is displayed only for a specific user when the privacy function is set.

14. The mobile terminal of claim 9, wherein when an item that is not registered to the wish list is selected and paid, the controller of the second user terminal transmits the paid item information along with information of notifying that the item has been presented as a gift to the first user to transfer the delivery of the item, and the first user enters delivery information on the gift received item to complete a gift receipt or selects another gift category to exchange the gift received item with another item.

15. The mobile terminal of claim 9, wherein when information indicating that an item has been presented as a gift is received from an offline store, the controller (180) of the first terminal sets the delivery information of the item according to the first user's input to complete a gift receipt.
